Europäisches Patentamt

European Patent Office

Office européen des brevets

(11) Publication number: **0 166 223**
A2

# EUROPEAN PATENT APPLICATION

(21) Application number: **85106414.7**

(51) Int. Cl.⁴: **F 16 B 39/28, F 16 B 39/12**

(22) Date of filing: **24.05.85**

(30) Priority: **24.05.84 JP 105372/84**

(43) Date of publication of application: **02.01.86**
**Bulletin 86/1**

(84) Designated Contracting States: **DE FR GB IT SE**

(71) Applicant: **Komatsu, Minoru, 1-544, Ikebukuro**
**Toshima-ku, Tokyo-To (JP)**

(72) Inventor: **Komatsu, Minoru, 1-544, Ikebukuro**
**Toshima-ku, Tokyo-To (JP)**

(74) Representative: **Eitle, Werner, Dipl.-Ing. et al, Hoffmann,**
**Eitle & Partner Patentanwälte Arabellastrasse 4,**
**D-8000 München 81 (DE)**

(54) **Double locknut assembly.**

(57) A double locknut assembly (1) is disclosed which is suitable for fastening mechanical members (2a, 2b) together with a bolt (4) having male screw threads and for providing a semi-permanent and yet detachable connection. The assembly (1) includes a pair of nuts (6, 7) each being provided with a tapped hole having female screw threads to be engaged with the male screw threads of the bolt. Each nut has a helically inclined surface (9, 13) at a respective corresponding end face to mate with each other. Each helically inclined surface is sloped in the same direction as the screw threads of the bolt (4), and when the assembly (1) is secured on a mechanical member a great frictional force is generated between the two inclined surfaces thereby preventing the assembly from being loosened.

1

## DOUBLE LOCKNUT ASSEMBLY

### BACKGROUND OF THE INVENTION

This invention relates generally to a double locknut assembly and, more particularly, to a double locknut assembly adapted to be secured to machines and mechanical parts for fastening with low risk of loosening and false unscrewing from a bolt after it is once fastened.

There are a number of double locknut assemblies generally known in the prior art and specifically adapted to fasten mechanical members and parts. However, there have often been cases in which a nut of the assembly is easily loosened and unscrewed when external forces such as vibrations and shocks are exerted on a bolt-nut assembly.

In order to avoid this, various kinds of double locknut assemblies have been employed. In one conventional double locknut assembly, a pair of nuts having the equal shape are provided and screwed onto a bolt. In its application, firstly, one of the nuts which is closer to the mechanical parts to be joined is tightly fastened. In the next step, the other nut which is remote from the parts to be joined is fastened against the surface of the first nut. The fastening should be strong enough to generate a substantial frictional force between the contact surfaces of the two nuts.

At the time the double locknut is tightened, the fastening forces remain on the parts to be joined, however, as time goes, the nut begins to loosen up due to vibrations and impact forces exerted upon the assembly and the assembly loses its grip and no longer functions as a double nut assembly, with the result that it become loose like a single nut.

In addition, when the conventional double locknut assembly is fastened against a mechanical member, a tightening tool such as a spanner or a wrench is used to tightly fasten it. This sometimes results in damage to the threads of the two nuts of the assembly and the bolt, whereby the nuts easily become loose.

Accordingly, even if the frictional force between the end surface of one of the two nuts and the surface of the mechanical member to be joined is increased, the nuts cannot be completely prevented from becoming loose.

Another double locknut assembly as disclosed in, for example, Japanese Patent Publication No. 25700/ 1973, has a recessed female nut in the shape of a cup and a convex male nut which is provided with a flange and a cylindrical screw portion projecting from the flange. The cylindrical screw portion of the male nut is inserted into the female nut. At the center portion of each nut is usually provided a tapped hole, the inner peripheral surface of which is formed with female screw threads to engage with the male screw threads of a bolt. The outer peripheral surface of the cylindrical screw portion of the male nut is provided with left-hand male screw threads to engage with left-hand female screw threads on the inner peripheral surface of the female nut.

When the double locknut assembly is fastened against a mechanical member, first, the two nuts are combined with each other in a manner that the cylindrical portion of the male nut is screwed into the female nut while being rotated in the left-hand direction. Thereafter, the combined nuts are engaged with the projected portion of the bolt projecting from the surface of the mechanical member while being rotated in the right-hand direction. With the end face of the combined nuts abutting against the surface of the mechanical member, one of the two nuts which is remote from the mechanical member to be fastened is rotated in the left-hand direction to generate a great friction force between the engaging surfaces of the two nuts. At this time the two nuts are pulled toward each other to bite against the bolt.

As mentioned above, this double locknut assembly is adapted to bite against the bolt in such a manner that the male and female nuts are tightened against or pulled toward each other so as to form an integral unit with either one of the male and female nuts abutting against the mechanical parts to be joined. Accordingly, in the assembly, it is not necessary to increase excessively the friction force between the end face of one of the two nuts and the surface of the mechanical member to be joined to prevent the double locknut assembly from becoming loose. This double locknut assembly is highly effective for fastening most mechanical members under ordinary conditions. However, under certain conditions of severe vibrations and impact forces imparted to the fastening for a long period of time, a much more positive double locknut assembly of even greater reliability becomes necessary. As a result of our study on this problem, we have come to the conclusion that the friction force between the two nuts must be enhanced to obtain highly reliable double locknut assembly.

### SUMMARY OF THE INVENTION

It is an object of the present invention to solve the above-mentioned defects and to provide a double locknut assembly capable of fastening machine parts with higher reliability.

It is another object of this invention to provide a double locknut assembly which has a positive and highly reliable locking function to prevent loosening after tightening relative to a bolt and can be easily fastened thereagainst and released therefrom.

It is a further object of the present invention to provide a double locknut assembly which has a pair of nuts, a first nut being provided closer to the mechanical parts to be joined and the second nut remote from the mechanical parts, and each cooperating to produce a great frictional force at adjoining end surfaces.

In a further aspect of the present invention, it is possible to provide a double locknut assembly including a pair of identically-shaped nuts each having a top end surface and a bottom end surface, the top end surface of the first nut and the bottom end surface of the second nut having complementary forms, each in a helically inclined plane.

In accordance with the present invention, the complementary form of the helically inclined surfaces will provide intimate contacts between the first and the second nuts and allow them to be screwed in a direction onto the bolt smoothly in the first place, and in the second place when the second nut is rotated in the opposite direction a great frictional force will be generated for fastening mechanical parts.

The invention is further described with the aid of the accompanying drawings, which illustrate preferred embodiments by way of example only. The nature, utility and features of this invention will be more clearly apparent from the following detailed description with respect to the preferred embodiments when read in conjunction with the accompanying drawings briefly described below.

BRIEF DESCRIPTION OF THE DRAWINGS

In the accompanying drawings:

Fig. 1 is a side view, partially broken away, showing the state wherein a double locknut assembly of this invention is engaged with a bolt;

Fig. 2 is an elevational sectional view of the first nut of the double locknut assembly shown in Fig. 1;

5

Fig. 3 is a side view of the first nut shown in Fig. 2;

Fig. 4 is a plan view of the first nut shown in Fig. 3;

Fig. 5 is an elevational sectional view of the second nut of the present invention as shown in Fig. 1;

Fig. 6 is a side view of the second nut shown in Fig. 5;

Fig. 7 is a plan view of the second nut shown in Fig. 6;

Fig. 8 shows a perspective view of another embodiment of the present invention in which a nut is provided with two helically inclined surfaces on its top end;

Fig. 9 is a side view, partially broken away, showing the state wherein a double nut assembly according to another embodiment of the present invention is described in conjunction with the bolt;

Fig. 10 is an elevational sectional view of the first nut shown in Fig. 9;

Fig. 11 is a side view of the first nut shown in Fig. 10;

Fig. 12 is a plan view of the first nut shown in Fig. 11;

Fig. 13 is an elevational sectional view of the second nut according to another embodiment shown in Fig. 9;

Fig. 14 is a side view of the second nut shown in Fig. 13;

Fig. 15 is a plan view of the second nut shown in Fig. 14; and

Fig. 16 is an enlarged side view, in longitudinal section, of the double nut assembly for explaining tightening forces generated therein when the nuts are fastened relative to a bolt.

DETAILED DESCRIPTION OF THE INVENTION

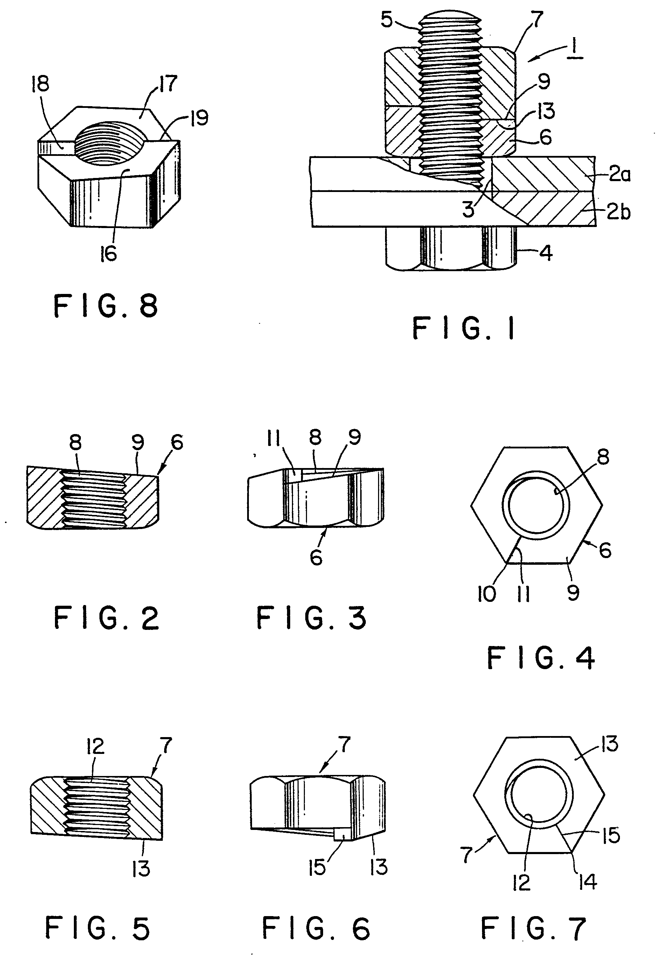

Referring first to Fig. 1, an improved double locknut assembly, generally indicated by the numeral 1, fastens two mechanical members 2a and 2b. The mechanical members 2a and 2b are provided with a through aperture 3 through which a shank 5 of a bolt 4 is inserted and extends upward. With the extended portion of the shank 5 the double locknut assembly 1 engages with the bolt 4. As is shown in Fig. 1, the double locknut assembly 1 includes a pair of identically shaped nuts, that is, a first nut 6 and a second nut 7. A top end surface 9 of the first nut 6 and a bottom end surface 13 of the second nut 7 contact each other. Both the first nut 6 and the second nut 7 are hexagonal in shape, and so is the head of the bolt 4.

As is shown in Figs. 2 to 4, at the central portion of the first nut 6 is provided a tapped hole, on the inner peripheral surface of which are formed a plurality of female right-hand screw threads 8 to engage with a plurality of male screw threads formed on the outer peripheral surface of the bolt shank 5. The top end surface 9 is helically inclined in the right-hand direction, that is, the same helical winding direction as the female screw threads in the tapped hole, and extends downwardly, starting from a corner 10 and terminating at the same position after one helical wind with a stepped portion 11.

The second nut 7 also has a plurality of female screw threads 12 at the peripheral surface of a through aperture provided at the central portion thereof. With the first nut 6 the female threads 12 are right-handed. The bottom end surface 13 is also helically inclined downward in the right-hand direction starting from a corner 14 and terminating at the same corner with a stepped portion 15, so that the inclined surface 13 corresponds to the helically

7

inclined surface 9 of the first nut 6 and capable
of mating therewith.

The helical inclination angles of the inclined
surfaces 9 and 13 are greater than the lead angle of
the female screw threads, and accordingly, if the
second nut 7 is rotated in the opposite direction,
i.e. in the left-hand direction, a substantial
frictional force will be generated between the
inclined surfaces 9 and 13.

As shown in Fig. 8, the first nut can also be
provided with a plurality of helically inclined
surfaces 16 and 17. The surface 17 starts at a
corner with a stepped portion 18 and terminates at an
opposite corner with another stepped portion 19. The
other inclined surface 16 starts at the corner with
the stepped portion 19 and terminates at the stepped
portion 18. It should be understood that the
second nut is provided with the correspondingly formed inclined surfaces, and further the top end surface
can be divided into more than two inclined areas.

The use and operation of the nut according to the
present invention will now be described. When the
double locknut assembly 1 of this invention is used,
first the inclined surface 9 of the first nut 6 and
the inclined surface 13 of the second nut 7 are brought
into light abutment against each other with the
hexagonal shapes of the two nuts registered with each
other. Also the stepped portions 11 and 15 are in
close contact. Under this state of engagement the
first nut 6 and the second nut 7 are screwed onto the
projected bolt shank 5. After the bottom end surface
of the first nut 6 has been brought into a light
contact with the upper surface of the mechanical member
2a, the first nut 6 is further rotated by means of a
spanner or like tool in the right-hand direction to
hasten tightly the two mechanical members 2a and 2b.
At the same time or thereafter, the second nut 7 is rotated in the opposite direction, i.e., left-hand direction in order to produce a great friction between the two helically inclined surfaces 9 and 13. Since a great friction force is generated between the two surfaces 9 and 13, the second nut 7 pushes the first nut 6 against the top surface of the upper mechanical member 2a and also both of the nuts 6 and 7 exert compression toward each other, they are quite stable on the shank 5 of the bolt 4. In order to add the frictional forces between the first and the second nuts 6 and 7, it is only necessary to rotate the second nut 7 in the left-hand direction without moving the first nut 6. At this time, the compression upon the mechanical members will not be weakened.

Although the embodiment was described with reference to the bolts and nuts having a right-hand screw threads, if the bolt is provided with left-hand screw threads, the pair of nuts should also have left-hand screw threads, and further the inclined surfaces of the first and the second nuts have to be left-hand helical surfaces.

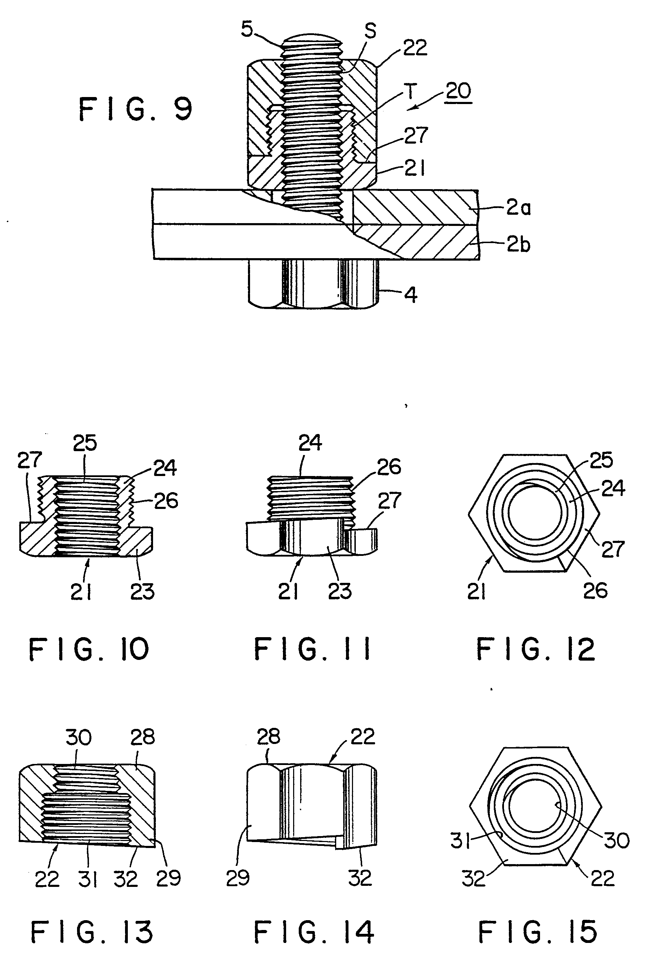

A second embodiment will next be described with reference to Figs. 9 to 16 in which like numerals designate like elements in Figs. 1 to 8. The two mechanical members 2a and 2b are fastened by a combination of a bolt 4 and a double locknut assembly 20 of this invention. As described in respect of the first embodiment the bolt 4 has a shank 5 which extends through a drilled hole formed through the two mechanical members. Upon the projecting portion of the shank 5 the double locknut assembly 20 is engaged. The double locknut assembly 20 of the current embodiment consists of a first nut 21 and a second nut 22.

As shown in Figs. 10 to 12 the first nut 21 has a flange 23 of hexagonal shape in plan view and a cylindrical portion 24 projecting upward from the flange 23. At the center portion of the first nut 21 is provided a tapped hole, the inner peripheral surface of which is provided with a plurality of first female right-hand screws 25 to engage with the male screw threads of the bolt shank 5. On the outer peripheral surface of the cylindrical portion 24 is provided a plurality of second male right-hand screw threads 26, the pitch of which is smaller than that of the first female right-hand screw threads 25. Furthermore, the flange 23 has, on the side of the second nut 22, a helically inclined surface 27 extending along the right-hand screw with a certain inclination angle. The helically inclined surface 27 starts at a corner of the hexagonal flange 23, extends around and along the root portion of the cylindrical portion 23 and terminates at the same corner.

As shown in Figs. 5 to 7 the second nut 22 has a concave shape like an inverted hexagonal cup. Through a base portion 28 of the second nut 22 is provided an upper tapped hole, the wall 29 of which is formed with a plurality of third female right-hand screw threads 30 to engage with the screw threads of the bolt 5 as shown in Fig. 9. Another lower tapped hole is surrounded by the wall 29. This tapped hole has a larger diameter than that of the upper tapped hole, and on its inner peripheral surface is provided a plurality of fourth female right-hand screw threads 31 to engage with the second male right-hand screw threads 26.

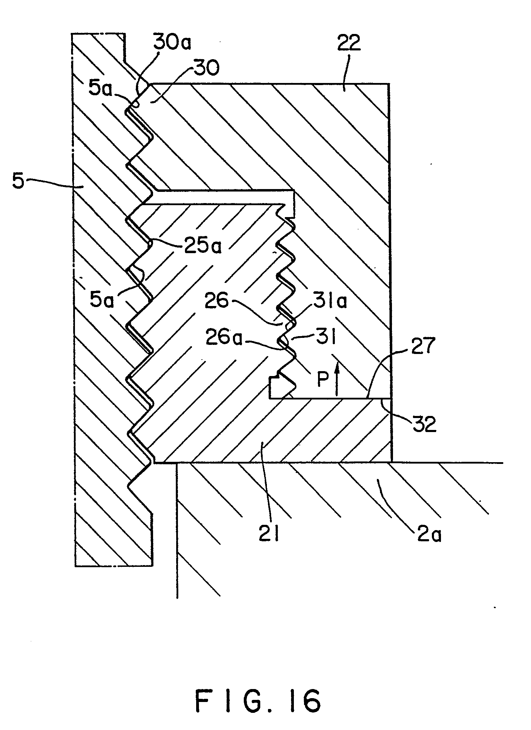

In use of the double locknut assembly of the second embodiment, in the first place, the cylindrical portion 24 of the first nut 21 is screwed into the lower tapped hole of the second nut 22 while being rotated in the right-hand direction to combine the two nuts. On this occasion the helical inclined surface 27 of the first nut 21 and the helical inclined surface 32 of the second nut 22 are brought into a light abutment against each other with the hexagonal shapes of the two nuts registered with each other. After the bottom surface of the first nut 21 has been brought into abutment against the surface of the mechanical member 2a, the first nut 21 is further rotated by means of a spanner or like tool in the right-hand direction. Thereafter, the second nut 22 is rotated with a spanner or like tool in the left-hand direction. As shown in Fig. 16, when the second nut 22 is rotated in the left-hand direction, a great frictional force will be generated at the contact areas of the two helically inclined surfaces 27 and 32 as one of the surfaces bites into the surface of the other. In this relationship, to the helically inclined surface 32 of the second nut 22 is applied a compression P from the helically inclined surface 27. Accordingly, the upward facing surfaces 31a of the fourth female screw threads 31 contact the downward facing surfaces 26a of the second male screw threads 26, respectively. At the same time, the upward facing surfaces 30a of the third female screw threads 30 contact the downward facing surfaces 5a of the bolt shank 5, respectively. Further, the upward facing surfaces 25a of the first female screw threads 25 contact the downward facing surfaces 5a of the bolt shank 5, respectively.

In accordance with the present invention, the screw pitch of the second male screw threads 26 of the first nut 21 and the fourth female screw threads 31 of the second nut 22 is smaller than that of the bolt shank 5. Accordingly, when frictional force is generated between the two helically inclined surfaces 27 and 32, the rotational angle for the second nut 22 increases. Also since the magnitude of the screw threads is different between the third female screw threads 30 of the second nut 22 and the fourth female screw threads 31 of the second nut 22, there occurs a bite between two screw engaging portions S and T thereby to prevent the two nuts 21 and 22 from loosening. As in the first embodiment the helically inclined surfaces 27 and 32 may be divided into a plurality of inclined surfaces.

When the double locknut assembly according to the present invention is to be unscrewed, firstly the second nut 22 is rotated in the right-hand direction until the hexagonal shapes of the both nuts 21 and 22 get registered; and secondly, the both nuts 21 and 22 are together rotated in the left-hand direction.

It is now apparent from the foregoing description that the double locknut assembly in accordance with the present invention has obtained a significant improvement in the frictional grip between the first nut and the second nut, and thus has considerable resistance against shocks and vibrations imparted to the assembly. Also, if one desires to loosen the double locknut assembly it can be done without much force, efforts and time.

While the double locknut assembly 20 is engaged with the bolt shank 5 in such a manner that the first nut 21 contacts the mechanical member 2a, it may be used in such a manner that the second nut 22 contacts the member 2a. Further, in the above embodiments, the blolt shank 5 has a plurality of right-hand screw threads. However, in the case of a bolt having a plurality of left-hand screw threads, the direction of screw threads and inclined surfaces of each nut is reversed.

Claims:

1.      A double locknut assembly (1) for fastening
mechanical members (2a, 2b) in cooperation with a
bolt (4) with male screw threads and said assembly
having identically shaped first and second nuts (6,
7) with female threads (8, 12) in their respective
centers to engage with said male threads of said
bolt (4) characterized in that said first and second
nuts (6, 7) both have helically inclined surfaces
(9, 13) at respective corresponding end faces to
mate with each other, said helically inclined surfaces (9, 13) sloping in the same direction as that
of the male screw threads of the bolt (4), said
threads of said bolt (4) and the female threads (8,
12) of the first and the second nuts (6, 7) being
engaged in a state wherein the first and the second
nuts (6, 7) are combined with each other until one
end face of the assembly (1) abuts against the surface of a mechanical member (2a) to be fastened,
either one of the first and the second nuts (6, 7)
which does not contact said mechanical member (2a)
being thereafter rotated in the direction opposite to
that of the male screw threads of the bolt (4) thereby
to fasten the assembly (1) against the mechanical
members (2a, 2b).

2.      A double locknut assembly according to claim
1, wherein said helically inclined surfaces of the
first and the second nuts are both divided into a ·
plurality of helically inclined surfaces (16, 17)
opposite to each other.

3.      A double locknut assembly according to claim
1 or 2 wherein the screw threads of said bolt (4) and
the winding direction of said helically inclined surfaces (9, 13; 16, 17) of the nuts are right-handed.

4.      A double locknut assembly (20) comprising a first nut (21) having a flange (23) and a cylindrical portion (24) projecting coaxially from the flange (23) and a second nut (22) in the form of a cup for receiving the cylindrical portion therein, the first nut (21) having: a tapped hole tapped with a plurality of first female screw threads (25) to engage with a bolt (4); and a plurality of second male screw threads (26) formed on the outer peripheral surface of the cylindrical portion (24), and the second nut (22) having: a base portion (28) provided with a tapped hole tapped with a plurality of third female threads (30) to engage with the bolt (4); and a cylindrical side wall portion (29) projecting from the base portion (28), the inner wall surface of the wall portion (29) being formed with a plurality of fourth female screw threads (31) to engage with the second male screw threads (26), characterized in that the second male screw threads (26) and the fourth female screw threads (31) are right-hand threads and that the end face of the side wall portion (29) of the second nut (22) and the end face of the flange (24) of the first nut (21) opposite to the end face of the side wall portion are respectively formed with two helically inclined surfaces (27, 32) to mutually confront and correspondingly mate with each other which are respectively inclined along the inclined direction of the bolt (4) and the first and the third female screw threads (25, 30), the threads of the bolt (4) and the first female screw threads (25) of the double nut assembly (1) being engaged with the bolt (4) in a state where the first and second nuts (21, 22) are combined with each other until one face of the assembly (1) abuts against the surface of a mechanical member (2a) to be fastened, either one of the first and second nuts (21, 22) which does not contact the surface of the mechanical member (2a) being thereafter rotated in the direction opposite to that of the screw threads thereby to fasten the assembly (1)
against the mechanical member.

5.      A double locknut assembly according to claim
4, wherein the bolt (4) has a plurality of right-
hand screw threads, the first and third female screw
threads (25, 30) being right-hand screw threads,
while the second male and fourth female screw threads
(26, 31) are right-hand screw threads.

6.      A double locknut assembly according to claim
4 or 5 wherein the assembly is so engaged with the bolt
(4) that the flange of the first nut (21) is brought
into abutment against the surface of the mechanical
member or members, the second nut (22) being rotated
when the two nuts are fastened to each other to
increase the frictional force between the two nuts.

7.      A double locknut assembly according to claim
4 or 5 wherein the assembly (20) is so engaged with the
bolt (4) that the base portion (29) of the second nut
(22) is brought into abutment against the surface of
the mechanical member or members, the first nut (21)
being rotated when the two nuts (21, 22) are fastened
to each other to increase the frictional force between
the two nuts (21, 22).

8.      A double locknut assembly according to any one of
claims 4 to 7 wherein the pitch of the second male and fourth
female screw threads (26, 31) is narrower than that
of the first and third female screw threads (25, 30)
and the screw threads of the bolt (4).

9.      A double locknut assembly according to any one of claims
4 to 8 wherein each of the helically inclined surfaces (27,
32) is divided into a plurality of contiguously adjoining slopes with a plurality of steps formed between the
two adjoining slopes.

0166223

1/3

FIG. 8

FIG. 1

FIG. 2

FIG. 3

FIG. 4

FIG. 5

FIG. 6

FIG. 7

0166223

FIG. 9

FIG. 10

FIG. 11

FIG. 12

FIG. 13

FIG. 14

FIG. 15

0166223

FIG. 16